# EUROPÄISCHE PATENTSCHRIFT

(11) **EP 2 686 581 B1**
(45) Veröffentlichungstag und Bekanntmachung des Hinweises auf die Patenterteilung: **14.09.2016**
(21) Anmeldenummer: 12700779.7
(22) Anmeldetag: 11.01.2012
(51) Int. Cl.: F16H 57/031, F16H 57/04

(54) **GETRIEBEVORRICHTUNG**
TRANSMISSION DEVICE
DISPOSITIF DE TRANSMISSION

(30) Priorität: 17.03.2011 DE 102011014378; 11.05.2011 CN 201120146858 U
(43) Veröffentlichungstag der Anmeldung: 22.01.2014
(73) Patentinhaber: Sew-Eurodrive GmbH & Co. KG, 76646 Bruchsal (DE)
(72) Erfinder: WU, Zili, Tianjin 300060 (CN)
(74) Vertreter: Tüngler, Eberhard
(86) Internationale Anmeldenummer: PCT/EP2012/000102
(87) Internationale Veröffentlichungsnummer: WO 2012/123045

(56) Entgegenhaltungen:
- EP-A2- 1 610 031
- DE-A1- 3 209 514
- DE-A1-102005 031 197
- DE-A1-102008 017 755
- US-A- 2 511 479
- US-A- 2 699 841
- US-A- 2 756 614
- US-A- 2 832 230

## Beschreibung

Die Erfindung betrifft eine Getriebevorrichtung.

Es ist allgemein bekannt, dass Getriebe Verzahnungsteile aufweisen, so dass im Betrieb Wärme erzeugt wird, die ans Getriebeöl zumindest teilweise abfließt.

**Aus der gattungsbildenden** US 2 699 841 A **ist eine Geschwindigkeitswechseleinheit bekannt mit Schmierungsvorrichtung hierfür.**

**Aus der** DE 32 09 514 A1 **ist eine Getriebeanlage mit Druckschmierung bekannt.**

**Aus der** US 2 511 479 A **sind Kühlmittel für ein Getriebe bekannt.**

**Aus der** US 2 832 230 A **ist ein Getriebe mit vertikaler Abtriebswelle bekannt.**

**Aus der** US 2 756 614 A **ist ein Getriebe bekannt.**

**Aus der** EP 1 610 031 A2 **ist eine Schmierung für eine Geschwindigkeitswechseleinrichtung bekannt.**

**Aus der** DE 10 2008 017 755 A1 **ist eine Kühlanordnung für ein Getriebe bekannt.**

**Aus der** DE 10 2005 031 197 A1 **ist ein Antrieb mit Lüfter bekannt.**

Der Erfindung liegt daher die Aufgabe zugrunde, ein Getriebe kompakt weiterzubilden.

Erfindungsgemäß wird die Aufgabe bei der Getriebevorrichtung nach den in Anspruch 1 angegebenen Merkmalen gelöst.

Wichtige Merkmale der Erfindung bei der Getriebevorrichtung sind, dass die Getriebevorrichtung, insbesondere Getriebe, ein zentrales Gehäuseteil aufweist, welches ein Lager einer abtreibenden und ein Lager einer eintreibenden Welle aufnimmt,
wobei ein Lagerdeckel auf das zentrale Gehäuseteil aufgesetzt und verbunden ist, insbesondere schraubverbunden,
wobei der Lagerdeckel die axialen Stirnseite der abtreibenden Welle und/oder einer Zwischenwelle gehäusebildend abdeckt,
wobei zwischen Lagerdeckel und zentralem Gehäuseteil ein von Öl durchströmter Hohlraumbereich, insbesondere Öltasche, ausgebildet ist.
Von Vorteil ist dabei, dass der Lagerdeckel als Kühlkörper für das im Hohlraumbereich druchströmende Öl fungiert. Somit ist eine effektive Entwärmung erreichbar.

Erfindungegemäß ist am zentralen Gehäuseteil eine ebene Berührfläche ausgebildet, in der Bohrungen eingebracht sind und der Lagerdeckel mit seiner entsprechend ebenen Berührfläche auf die ebene Berührfläche des zentralen Gehäuseteils aufgesetzt und mittels in die Bohrungen schraubverbundenen Schrauben verbunden ist,
wobei die ebene Berührfläche des zentralen Gehäuseteils eine Ausnehmung umfasst, die zumindest ein Teilbereich des Hohlraumbereichs ist und in welche zumindest ein innerhalb des zentralen Gehäuseteil verlaufender Kanal mündet,
wobei die Ausnehmung als Vertiefung in die ebene Berührfläche des zentralen Gehäuseteils eingebracht ist. Von Vorteil ist dabei, dass eine dichte Verbindung des Lagerdeckels mit dem Gehäusedeckel in einfacher Weise herstellbar ist und der Hohlraumbereich in einfacher Weise ausbildbar ist.

Erfindundsgemäß ist aus der eintreibenden Welle ein Lüfter formschlüssig und/oder kraftschlüssig verbunden, dessen Kühlluftstrom am Lagerdeckel vorbeiströmt,
insbesondere wobei der Kühlluftstrom durch Ausnehmungen eines Laternenflansch durchtritt, insbesondere in zur eintreibenden Welle radialer Richtung, insbesondere wobei der Laternenflansch mit dem Gehäuse, insbesondere mit dem zentralen Gehäuseteil der Getriebevorrichtung, verbunden ist und an seiner von der Getriebevorrichtung abgewandten Seite mit einem Motorgehäuse eines die eintreibende Welle antreibenden Motors verbunden ist. Von Vorteil ist dabei, dass der Lüfter auf der eintreibenden Welle passiv antreibbar ist, also mitdrehend mit der Welle. Auf diese Weise ist der Luftstrom direkt auf den Lagerdeckel richtbar und dort somit die Oberfläche nur gering vergrößernde Kühlelemente notwendig.

Bei einer vorteilhaften Ausgestaltung ist im Getriebegehäuse ein Öltank angeordnet ist, der zumindest teilweise begrenzt ist durch das zentrale Gehäuseteil.

Von Vorteil ist dabei, dass im unteren Teil des Getriebes ein Öltank vorgesehen ist, in welchem das Öl sich ansammelt und somit ein Ansaugrohr einer Ölpumpe ständig mit Öl versorgbar ist, also das Ansaugen von Luft vermieden wird. Außerdem ermöglicht der Öltank die Beruhigung von Ölschaum, also die Separation von Luft und Öl. Der Öltank ist im Getriebe integriert, da er durch das zentrale Gehäuseteil zumindest teilweise begrenzt ist. Außerdem ist er in einem Beriech des Getriebes vorsehbar, wo keine Funktionsteile sind, also kein Raumbereich für die Funktion des Getriebes benötigt werden.

Bei einer vorteilhaften Ausgestaltung weist die Getriebevorrichtung derart montiert ist in einer Maschine oder Anlage, insbesondere Kühlturmanlage, dass die abtreibende Welle nach unten, also in Gravitationsrichtung, herausragt aus dem Gehäuse der Getriebevorrichtung. Von Vorteil ist dabei, dass am nach unten herausragenden Endbereich ein Lüfter eines Kühlturms antreibbar ist und somit die Unterseite dem Luftstrom dieses Lüfters aussetzbar ist. Außerdem ist das untere Lager der abtreibenden Welle fettschmierbar und mittels Labyrinthdichtung abdichtbar.

Bei einer vorteilhaften Ausgestaltung ist der Öltank durch das zentrale Gehäuseteil und ein mit diesem dicht verbundenen Gehäusedeckel begrenzt. Von Vorteil ist dabei, dass der Öltank durch dichtes Verbinden, insbesondere Schraubverbinden, des Gehäusedeckels mit dem zentralen Gehäuseteil herstellbar ist.

Bei einer vorteilhaften Ausgestaltung ist der Öltank über einen Kanal mit einer Ölpumpe verbunden, wobei der Kanal als Ausnehmung im zentralen Gehäuseteil ausgebildet ist, insbesondere wobei der Kanal aus Bohrungsabschnitten, insbesondere axial, also parallel zur Achsrichtung der abtreibenden Welle, und hierzu transversal verlaufenden Bohrungsabschnitten, zusammengesetzt ist. Von Vorteil ist dabei, dass die Kanäle in einfacher Weise herstellbar sind. Außerdem sind die Kanäle im zentralen Gehäuseteil integriert ausgebildet und es ist keine separate Verrohrung zur Ölführung notwendig. Das Öl ist also innerhalb des zentralen Gehäuseteils geführt und temperiert somit auch direkt das zentrale Gehäuseteil. Durch thermische Unterschiede, also unterschiedliche Temperaturen an verschiedenen Positionen des Gehäuseteils, bedingte Spannungen werden also vermindert.

Bei einer vorteilhaften Ausgestaltung sind im zentralen Gehäuseteil Kanäle ausgebildet, die vom Getriebeinnenraum in den Öltank münden,

insbesondere wobei die Kanäle jeweils aus Bohrungsabschnitten, insbesondere axial, also parallel zur Achsrichtung der abtreibenden Welle, und hierzu transversal verlaufenden Bohrungsabschnitten, zusammengesetzt sind. Von Vorteil ist dabei, dass in einfacher Weise ein Rückfluss des Öls in den Öltank erreichbar ist.

Erfindundsgemäß verläuft im zentralen Gehäuseteil ein Kanal von der Ölpumpe an die Oberseite der Getriebevorrichtung, wobei der Mündungsbereich von einem Lagerdeckel abgedeckt ist, der auch die Stirnseite eines der axialen Endbereiche der abtreibenden Welle abdeckt, und in einen Raumbereich, insbesondere Öltasche, mündet, der zumindest vom zentralen Gehäuseteil und vom Lagerdeckel begrenzt ist. Von Vorteil ist dabei, dass eine schmale Öltasche gebildet ist, die von dem dünnen Lagerdeckel geschützt ist und von Öl durchströmt ist. Somit ist eine hervorragende und effektive Kühlung des Öls erreichbar.

Bei einer vorteilhaften Ausgestaltung führen aus dem Raumbereich Kanäle zu zu schmierenden und/oder zu kühlenden Bereichen im Innenraum der Getriebevorrichtung, insbesondere zu einem Lager und/oder zu einem Bereich von miteinander im Eingriff stehenden Verzahnungen. Von Vorteil ist dabei, dass das gekühlte Öl den Bereichen zur Schmierung und Kühlung zuführbar ist.

Bei einer vorteilhaften Ausgestaltung ist auf der eintreibenden Welle ein Lüfter formschlüssig und/oder kraftschlüssig verbunden, dessen Kühlluftstrom am Lagerdeckel vorbeiströmt, insbesondere wobei der Kühlluftstrom durch Ausnehmungen eines Laternenflansch durchtritt, insbesondere in zur eintreibenden Welle radialer Richtung, insbesondere wobei der Laternenflansch mit dem Gehäuse, insbesondere mit dem zentralen Gehäuseteil der Getriebevorrichtung verbunden ist und an seiner von der Getriebevorrichtung abgewandten Seite mit einem Motorgehäuse verbunden ist. Von Vorteil ist dabei, dass eine effektive Kühlung bewirkbar ist.

Bei einer vorteilhaften Ausgestaltung ist das zentrale Gehäuseteil zweistückig ausgeführt, wobei zumindest ein Kanal vom oberen Stück ins untere Stück durchgeführt ist. Von Vorteil ist dabei, dass die beiden Stücke dicht verbunden sind und somit Öl durchführbar ist. Vorzugswiese wird eine Dichtung im Verbindungbereich des oberen und unteren Stücks angeordnet.

Bei einer vorteilhaften Ausgestaltung weist das untere Stück des zentralen Gehäuseteils an seiner Unterseite Kühlrippen auf, insbesondere wobei an einer den Öltank zumindest teilweise begrenzenden Wand des unteren Stücks Kühlrippen ausgebildet sind und/oder wobei an einer die Lageraufnahme zumindest teilweise begrenzenden Wand des unteren Stücks Kühlrippen ausgebildet sind. Von Vorteil ist dabei, dass eine besonders effektive Kühlung des Öltanks und des abtriebsseitigen Lagers bewirkbar ist. Außerdem sind die Kühlrippen an der Unterseite dem Kühlluftstrom des auf der abtreibenden Welle vorgesehenen Lüfters ausgesetzt und somit eine effektive Kühlung erreichbar.

Bei einer vorteilhaften Ausgestaltung ist an der Oberseite des oberen Stücks eine wellenartige Struktur als oberflächenvergrößernder Bereich ausgebildet. Von Vorteil ist dabei, dass eine verbesserte Kühlung erreichbar ist.

Bei einer vorteilhaften Ausgestaltung ist an der Außenseite des Lagerdeckels eine wellenartige Struktur als oberflächenvergrößernder Bereich ausgebildet, die im Kühlluftstrom des Lüfters angeordnet ist. Von Vorteil ist dabei, dass eine verbesserte Kühlung erreichbar ist.

Bei einer vorteilhaften Ausgestaltung ist ein Gehäusedeckel mit dem unteren und dem oberen Stück des zentralen Gehäuseteils verbunden, wobei der Gehäusedeckel seitlich angeordnet ist und/oder eine wellenartige Struktur als oberflächenvergrößernder Bereich aufweist. Von Vorteil ist dabei, dass eine verbesserte Entwärmung und eine leichtere Montage des Getriebes ermöglicht ist.

Bei einer vorteilhaften Ausgestaltung ist im zentralen Gehäuseteil ein Kanal vorgesehen, insbesondere ein aus radial und axial verlaufenden Bohrungsabschnitten zusammengesetzter Kanal,
wobei der Kanal vom oberen Stück ins untere Stück durchgeführt ist,
wobei der Kanal von der Oberseite zum Bereich des unteren Lagers der abtreibenden Welle führt, welches fettgeschmiert ist, wobei die Nachschmierung durch Einleitung von Fett in den Mündungsberiech an der Oberseite der Getriebevorrichtung ausführbar ist. Von Vorteil ist dabei, dass der Kanal bei zweistückiger Ausführung vom oberen ins untere Stück übergeht und eine Druckschmierung mit Fett ausführbar ist. Dabei ist vorteiligerweise die Verbindung vom Kanalabschnitt des oberen zum Kanalabschnitt des unteren Stücks des zentralen Gehäuseteils dicht ausgeführt.

Bei einer vorteilhaften Ausgestaltung ist am zentralen Gehäuseteil, insbesondere an einem Eckbereich des quaderförmig ausgebildeten unteren Stücks, insbesondere am unteren Stück, ein Befestigungsbereich einstückig ausgeformt, der derart in seitlicher, also radialer Richtung, sich erstreckt, dass eine in axialer Richtung verlaufende durchgehende Bohrung eingebracht ist, so dass eine Verbindungsschraube in axialer Richtung durchführbar und mit einem festen Teil der die Getriebevorrichtung aufnehmenden Anlage oder Maschine verbindbar ist. Von Vorteil ist dabei, dass ein vergrößerter Bereich für die Befestigung des Getriebes an einem festen Teil ermöglicht ist.

Weitere Vorteile ergeben sich aus den Unteransprüchen.

Die Erfindung wird nun anhand von schematischen Abbildungen näher erläutert:

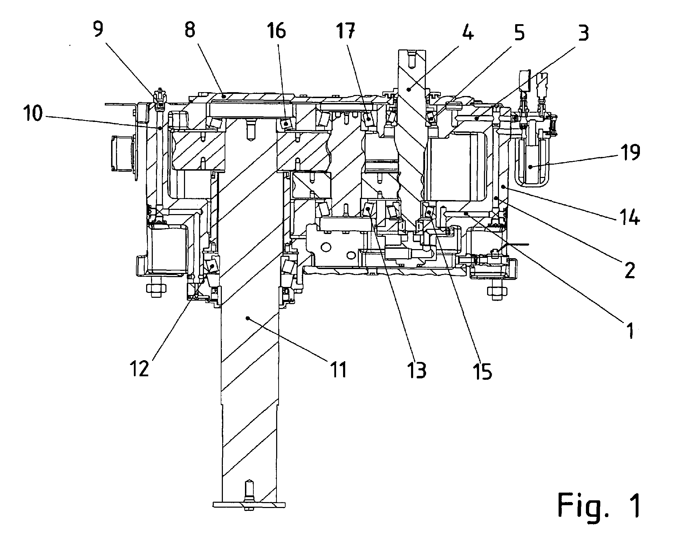

In der Figur 1 ist ein Querschnitt durch ein erfindungsgemäßes Getriebe gezeigt, wobei ein eintriebsseitiger Laternenflansch und ein von ihm gehäusebildend umgebene, auf der eintreibenden Welle vorgesehene Lüfter ausgeblendet sind.

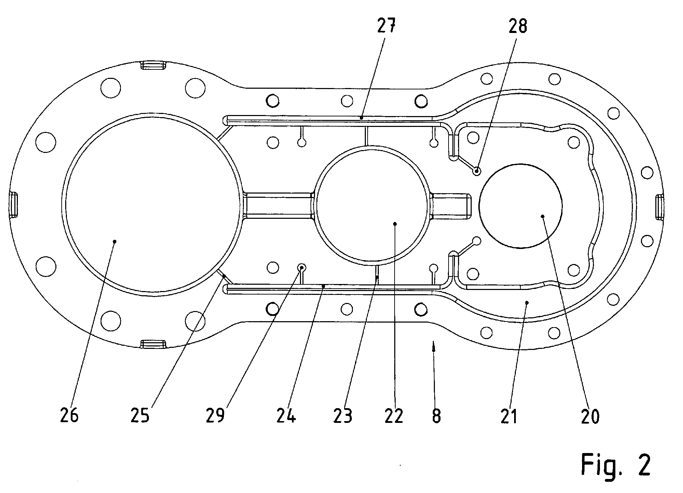

In der Figur 2 ist die eine Draufsicht auf die Innenseite des Lagerdeckels 8 gezeigt.

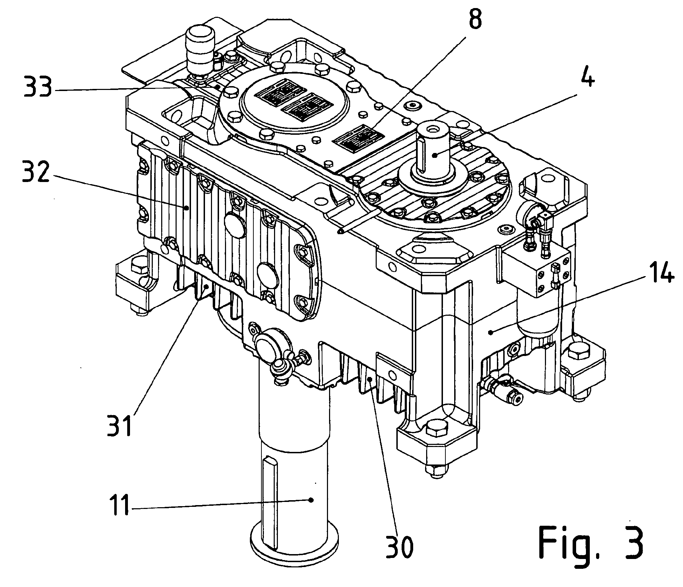

In der Figur 3 ist eine Schrägansicht auf das Getriebe gezeigt.

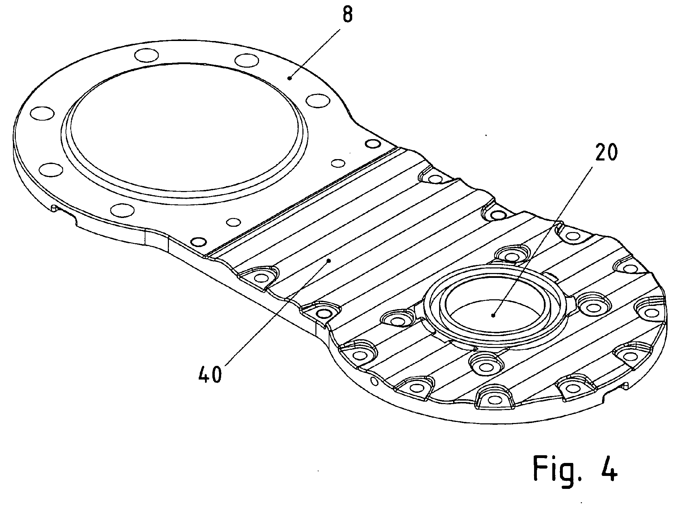

In der Figur 4 ist eine Schrägansicht auf die Außenseite des Lagerdeckels 8 gezeigt.

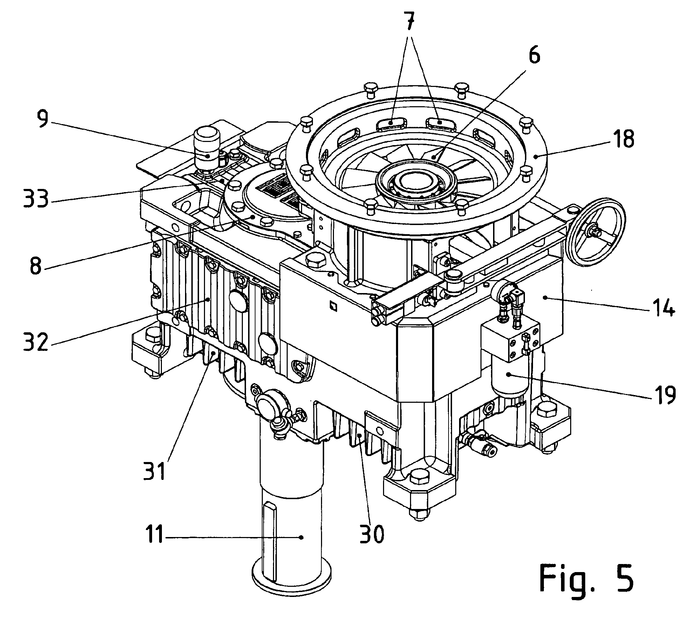

In der Figur 5 ist eine Schrägansicht auf die Außenseite des erfindungsgemäßen Getriebes gezeigt, wobei der eintriebsseitige Laternenflansch und der von ihm gehäusebildend umgebene, auf der eintreibenden Welle vorgesehene Lüfter dargestellt sind.

Dabei ist ein zentrales Gehäuseteil 14 vorgesehen, welches Lager der Wellen des Getriebes aufnimmt und an Bereichen seiner Außenoberfläche Kühlrippen und oberflächenvergrößernde wellenartige Ausformungen aufweist.

Die eintreibende Welle 4 ist über ein Lager 5 und ein Lager 15 im zentralen Gehäuseteil 14 gelagert und weist axial zwischen den Lagern 5 und 15 eine Ritzelverzahnung auf. Alternativ ist dort auch ein eintreibendes Verzahnteil kraftschlüssig und/oder formschlüssig verbindbar.

Diese Ritzelverzahnung beziehungsweise dieses Verzahnteil ist im Eingriff mit einem Verzahnteil einer Zwischenwelle, die über Lager (5, 13) ebenfalls im zentralen Gehäuseteil 14 aufgenommen ist. Dabei befindet sich das Verzahnteil der Zwischenwelle und ein weiteres Verzahnteil der Zwischenwelle axial wiederum zwischen den Lagern (5, 13).

Das weitere auf der Zwischenwelle kraftschlüssig und/oder formschlüssig verbundene Verzahnteil steht im Eingriff mit einem Verzahnteil, das kraftschlüssig und/oder formschlüssig mit der abtreibenden Welle 11 verbunden ist.

Vorzugsweise ist die Bauform, also die Ausrichtung des Getriebes in der das Getriebe umfassenden Maschine oder Anlage derart, dass die abtreibende Welle nach unten, also in Gravitationsrichtung, herausragt.

Die abtreibende Welle ist über ein unteres Lager 12 und ein oberes Lager 16 im zentralen Gehäuseteil 14 gelagert.

Im axialen Bereich des unteren Lagers 12 ist eine Fettschmierung vorgesehen. Hierzu sind Bohrkanäle 10 im zentralen Gehäuseteil 14 ausgeführt, so dass ein Kanal von der Oberseite zum axialen Bereich des unteren Lagers gebildet ist. Der Kanal 10 mündet an der Oberseite über eine Anschlussvorrichtung für Fettschmierung, die auch verschließbar ist. Auf diese Weise ist bei Wartung des Getriebes Fett unter Druck einbringbar und somit der axiale Bereich des Lagers auf der unteren Seite in komfortabler Weise von der anderen Seite des Getriebes, also der Oberseite, aus versorgbar. Daher darf das Getriebe in eine derartige Maschine oder Anlage eingebaut werden,, in welcher die Unterseite unzugänglich ist. Trotzdem ist eine Wartungsschmierung in einfacher Weise ermöglicht. Insgesamt ist der Kanal 10 aus axial und radial verlaufenden Teilabschnitten zusammengesetzt, die jeweils als Bohrungen ausgeführt sind, wobei bei durchgehenden Bohrungen die jeweils ungenutzten Endbereiche der Bohrungen verschlossen sind, vorzugsweise mit einem Verschlussstopfen.

An der Oberseite ist ein Lagerdeckel 8 vorgesehen, welcher die Lageraufnahmebereiche der Lager 5, 16 und 17 abdeckt, wobei im vom Lagerdeckel 8 abgedeckten Oberflächenbereich des zentralen Gehäuseteils 14 eine Nutenstruktur eingearbeitet ist, so dass nach Aufsetzen des Lagerdeckels 8 Kanäle zum Durchleiten des Öls gebildet sind. Außerdem ist in dem abgedeckten Oberflächenbereich auch eine großflächige Vertiefung ausgebildet, so dass ein flacher Raumbereich zur Aufnahme von Öl gebildet ist, in welchen die Kanäle münden.

Alternativ oder zusätzlich ist die Nutenstruktur und die flächige Ausnehmung auch auf der Innenseite des Lagerdeckels 8 ausgebildet.
Dabei weist der Lagerdeckel 8 eine Ausnehmung 20 zur Durchführung der eintreibenden Welle auf, so dass oberhalb des zentralen Gehäuseteils 14 an der eintreibenden Welle ein Lüfter 6 verbunden, insbesondere kraftschlüssig und/oder formschlüssig, ist. Somit ist dieser Lüfter 6 in einem Gehäuseteil gehäusebildend umgeben, das als Laternenflansch 18 mit radial nach außen gerichteten Ausnehmungen 7 ausgebildet ist und auf das zentrale Gehäuseteil 14 aufgesetzt und verbunden ist.

Der vom Lüfter 6 erzeugte Luftstrom strömt am Lagerdeckel 8 vorbei, das an seiner Außenseite eine oberflächenvergrößernde wellige Kühlstruktur aufweist. Somit wird das an der Innenseite des Lagerdeckels 8 vorhandene Öl beim Durchströmen des flächigen Raumbereichs 21, insbesondere also eines taschenartigen Raumbereichs, gekühlt.

Der Lagerdeckel 8 ist im Bereich der Stirnseiten der Zwischenwelle und der abtreibenden Welle geschlossen ausgeführt und stellt somit eine Abdeckung 22 des Wellenendes der Zwischenwelle und Abdeckung 26 der abtreibenden Welle dar.

Aus dem Raumbereich 21 führen Ölkanäle 24 und 27 heraus und sind verbunden mit den Nuten (23, 25, 28, 29) zur Ölführung, mittels welcher Öl zu den Lagern der Abtriebswelle, der Zwischenwelle und/oder der eintreibenden Welle geführt wird, so dass diese stets ausreichend geschmiert sind, insbesondere beim Anlaufen des Getriebes.

Somit ist der dünnwandig ausgeführte Lagerdeckel 8 als Kühlkörper wirksam, da er auf der Oberseite des Getriebes angeordnet ist und somit dem Kühlluftstrom des auf der eintreibenden Welle oder in einem anderen Ausführungsbeispiel alternativ auf einer Zwischenwelle angeordneten Lüfters ausgesetzt. Durch die Ausbildung des düsenartig ausgeformten Laternenflansches ist ein besonders geringer Strömungswiderstand erreichbar. Die Öffnungen für den Luftdurchtritt sind seitlich angebracht, also in radialer Richtung, so dass die durchtretendes Luft nicht auf die antreibende Vorrichtung, insbesondere also Elektromotor, trifft.

Am zentralen Gehäuseteil 14 sind Wände ausgebildet, die den Öltank begrenzen. Durch den Öltank, der eine geringere Grundfläche aufweist als das Getriebe, insbesondere eine Grundfläche, die weniger als 30% der Grundfläche des Getriebes beträgt, ist es ermöglicht, dass insbesondere auch bei Stillstand des Getriebes das Öl sich im Öltank sammelt und daher ein hoher Ölstand erreichbar ist. Somit ist ein Ansaugrohr einer Ölpumpe 19 stets unter dem Ölstand, also unterhalb der Oberfläche des im Öltank sich befindenden Öls. Ein Ansaugen von Luft ist somit vermieden.

Vom Öltank zur Ölpumpe ist als Ansaugrohr ein Kanal im zentralen Gehäuseteil 14 angeordnet, der aus den Abschnitten 1 und 2 zusammengesetzt ist. Ausgangsseitig ist die Ölpumpe 19 an den Kanal 3 angeschlossen, der in durch die Ausnehmung im Lagerdeckel 8 gebildete Öltasche 21 mündet. Somit wird das warme Öl von der Ölpumpe 19 am Lagerdeckel 8 vorbeigeführt und dabei gekühlt.

Eine der Wände des Öltanks weist Aufnahmen für ein Lager der eintreibenden Welle und ein Lager der Zwischenwelle auf. In der Wand, die vorzugsweise die Oberseite des Öltanks darstellt, und/oder im zentralen Gehäuseteil 14 sind Kanäle eingearbeitet, insbesondere als Bohrungen, so dass Öl aus dem Getriebeinnenraum in den Öltank abfließt. Insbesondere bei Stillsetzen des Getriebes fließt das Öl in den Öltank.

Den Öltank begrenzende Seitenwände weisen an ihrer Außenseite Kühlrippen 30 auf, so dass eine Entwärmung des Öls im Öltank effektiv ermöglicht ist. Die Unterseite des Öltanks ist durch einen mit dem zentralen Gehäuseteil 14 dicht verbundenen Deckel gebildet. Dieser Deckel weist an seiner Außenseite eine oberflächenvergrößernde Welligkeit auf, so dass auch hierdurch die Entwärmung des Öls im Öltank verbessert ist.

Weitere Kühlrippen 31 sind am zentralen Gehäuseteil vorgesehen im Bereich der Lageraufnahme des Lagers 12 der abtreibenden Welle 11.

Somit ist einerseits das Gehäuse des Getriebes möglichst kompakt ausgeführt, wobei durch die Kühlrippenstrukturen und oberflächenvergrößernde Maßnahmen im Wesentlichen ein quaderförmiges Raumvolumen erreicht wird.

Durch die im zentralen Gehäuseteil 14 eingebrachten Bohrungen, welche als Ölkanäle wirksam sind, ist eine verbesserte Wärmeabfuhr vom Öl ans Gehäuse und von dort an die Umgebung erreicht. Insbesondere ist das Öl und das zentrale Gehäuseteil 14 auf möglichst gleichem Temperaturniveau.

Das untere Lager 12 der abtreibenden Welle ist in einer Lageraufnahme des zentralen Gehäuseteils 14 aufgenommen, wobei ein Teilbereich der Lageraufnahme auch eine Wand für den Öltank bildet, also diesen zumindest teilweise begrenzt.

Das zentrale Gehäuseteil ist vorzugsweise zweistückig ausgeführt. Somit sind im unteren Stück die Lageraufnahmen für die Lager (12, 13, 15) und der Öltank angeordnet und im oberen Stück die Lageraufnahmen für die Lager (5, 16, 17), die mittels des auf das obere Stück verbundenen Lagerdeckels 8 abgedeckt sind. Außerdem ist der Laternenflansch auf das obere Stück gesetzt und verbunden.

Das obere Stück des zentralen Gehäuseteils 14 weist an seiner Oberseite einen Bereich mit wellenartiger Ausbreitung auf, so dass auch hier eine oberflächenvergrößernde Struktur vorgesehen ist. Dieser Bereich ist an der Außenseite des Bereichs der Lageraufnahme für das obere Lager 16 angeordnet.

Ein Gehäusedeckel 32 deckt eine Öffnung im zentralen Gehäuseteil ab, so dass eine einfachere Montage ausführbar ist. Dieser Gehäusedeckel 32 weist ebenfalls eine wellenartige äußere Oberfläche als oberflächenvergrößernde Struktur auf.

Wichtig ist dabei auch, dass am unteren Stück des zentralen Gehäuseteils 14 Kühlrippen (30, 31) ausgebildet sind, wobei diese auch auf der Unterseite des Stücks angeordnet sind. Somit ist es ermöglicht, dass die abtreibende Welle 11 einen Lüfter antreibt und der in axialer Richtung angetriebene Luftstrom dann auf die Kühlrippen (30, 31) trifft. Hierdurch ist eine effektive Kühlung der Unterseite des Getriebes ermöglicht und somit insbesondere eine effektive Kühlung des im Öltank sich befindenden Öls und des unteren Lagers der abtreibenden Welle. Der abtriebsseitig erzeugte Luftstrom gelangt aber nur in geringem Umfang an die Oberseite. Daher ist an der eintreibenden Welle der Lüfter 6 aufgesetzt und kühlt den Lagerdeckel 8, so dass das an der Innenseite des Lagerdeckels 8 vorbeiströmende Öl gekühlt wird. Das im Öltank an der unteren Seite und vom Lagerdeckel an der Oberseite gekühlte Öl strömt dann den Lagern und den zu schmierenden Teilen des Getriebes, insbesondere auch den miteinander im Eingriff stehenden Verzahnungsbereichen zu und kühlt diese auch.

Bei weiteren erfindungsgemäßen Ausführungsbeispielen ist die Ölpumpe 19 zusätzlich in Reihe geschaltet mit einem Ölfilter, so dass metallischer Abrieb aus dem Öl herausfilterbar ist. Alternativ oder zusätzlich ist auch im Getriebe, insbesondere im Öltank des Getriebes ein Filter und/oder ein Dauermagnet anordenbar, so dass die metallischen, insbesondere magnetisierbaren, Partikel dort herausfilterbar sind. Zusätzlich oder alternativ sind die vom Getriebeinneren in den Öltank führenden Kanäle mit einem derart geringen Querschnitt ausgeführt, dass entsprechend zu große Partikel herausgefiltert werden. Somit sind die Kanäle als Filterstruktur wirksam.

### Bezugszeichenliste

1 Ölkanalabschnitt
2 Ölkanalabschnitt
3 Ölkanalabschnitt
4 eintreibende Welle
5 Lager
6 Lüfter
7 Ausnehmungen, insbesondere Luftdurchtrittsöffnungen im Laternenflansch
8 Lagerdeckel
9 Anschlussvorrichtung für Fettschmierung
10 Bohrung als Fettkanal
11 abtreibende Welle
12 Lager
13 Lager
14 zentrales Gehäuseteil
15 Lager
16 Lager
17 Lager
18 Gehäuseteil, insbesondere Laternenflansch
19 Ölpumpe
20 Ausnehmung zur Durchführung der eintreibenden Welle
21 Öltasche, Raumbereich für Öl
22 Abdeckung des Wellenendes der Zwischenwelle
23 Nut zur Ölführung
24 Ölkanal
25 Nut zur Ölführung
26 Abdeckung des Wellenendes der abtreibenden Welle
27 Ölkanal
28 Nut zur Ölführung
29 Nut zur Ölführung
30 Kühlrippen
31 Kühlrippen
32 seitlicher Gehäusedeckel mit wellenartiger Struktur zur Oberflächenvergrößerung
33 wellenartige Struktur zur Oberflächenvergrößerung

## Patentansprüche

1. Getriebevorrichtung, insbesondere Getriebe,
wobei die Getriebevorrichtung ein zentrales Gehäuseteil (14) aufweist, welches ein Lager einer abtreibenden **Welle (11)** und ein Lager einer eintreibenden Welle (4) aufnimmt,
**wobei** ein Lagerdeckel (8) auf das zentrale Gehäuseteil (14) aufgesetzt und verbunden ist, insbesondere schraubverbunden,
wobei der Lagerdeckel (8) **eine** Stirnseite eines der axialen Endbereiche der abtreibenden Welle **(11)** und optional auch einer Zwischenwelle gehäusebildend abdeckt,
wobei zwischen Lagerdeckel (8) und zentralem Gehäuseteil (14) ein von Öl durchströmter Hohlraumbereich (21), insbesondere Öltasche (21), ausgebildet und zumindest vom Zentralen Gehäuseteil (14) und vom Lagerdeckel (8) begrentt ist,
**wobei am zentralen Gehäuseteil (14) eine ebene Berührfläche ausgebildet ist, in der Bohrungen eingebracht sind und der Lagerdeckel (8) mit seiner entsprechend ebenen Berührfläche auf die ebene Berührfläche des zentralen Gehäuseteils (14) aufgesetzt und mittels in die Bohrungen schraubverbundenen Schrauben verbunden ist,**
**wobei die ebene Berührfläche des zentralen Gehäuseteils (14) und/oder die ebene Berührfläche an der Innenseite des Lagerdeckels (8) jeweils eine Ausnehmung umfasst, die zumindest ein Teilbereich des Hohlraumbereichs (21) ist,**
**wobei die Ausnehmung als Vertiefung in die ebene Berührfläche des zentralen Gehäuseteils (14) eingebracht ist,**
**dadurch gekennzeichnet, dass** die ebenen Berührflächen des zentralen Gehäuseteils (14) und des Lagerdeckels (8) eine durch den Lagerdeckel (8) und das zentrale Gehäuseteil jeweils eine durchgehende Bohrung (20), aufweisen zur Durchführung der eintreibenden Welle (4),
wobei die Bohrung (20), beabstandet ist von der Ausnehmung,
wobei auf der eintreibenden Welle (4) ein Lüfter formschlüssig und/oder kraftschlüssig verbunden ist, dessen Kühlluftstrom am Lagerdeckel (8) vorbeiströmt,
wobei innerhalb des zentralen Gehäuseteils(14) ein ersten Kanal (3) von einer Ölpumpe (19) an eine Oberseite der Getriebevorrichtung verläuft und in den Hohlraumbereich (21), mündet, wobei ein Mündungsbereich von dem Lagerdeckel (8) abgedeckt ist.

2. Getriebevorrichtung nach Anspruch 1 **dadurch gekennzeichnet, dass**
der Kühlluftstrom durch Ausnehmungen (7) eines Laternenflansch durchtritt,
insbesondere in zur eintreibenden Welle (4) radialer Richtung, insbesondere wobei der Laternenflansch mit dem Gehäuse, insbesondere mit dem zentralen Gehäuseteil (14) der Getriebevorrichtung, verbunden ist und an seiner von der Getriebevorrichtung abgewandten Seite mit einem Motorgehäuse eines die eintreibende Welle (4) antreibenden Motors verbunden ist.

3. Getriebevorrichtung nach mindestens einem der vorangegangenen Ansprüche,
**dadurch gekennzeichnet, dass**
im Getriebegehäuse ein Öltank angeordnet ist, der zumindest teilweise begrenzt ist durch das zentrale Gehäuseteil.

4. Getriebevorrichtung nach mindestens einem der vorangegangenen Ansprüche,
**dadurch gekennzeichnet, dass**
die Getriebevorrichtung derart montiert ist in einer Maschine oder Anlage, insbesondere Kühlturmanlage, dass die abtreibende Welle **(11)** nach unten, also in Gravitationsrichtung, herausragt aus einein Gehäuse der Getriebevorrichtung.

5. Getriebevorrichtung nach Anspruch 3,
**dadurch gekennzeichnet, dass**
der Öltank durch das zentrale Gehäuseteil und ein mit diesem dicht verbundenen Gehäusedeckel begrenzt ist.

6. Getriebevorrichtung nach Anspruch 3 oder 5,
**dadurch gekennzeichnet, dass**
der Öltank über einen zweiten Kanal 1,2 mit der Ölpumpe (19) verbunden ist, wobei der zweite Kanal (1,2) als Ausnehmung zweite im zentralen Gehäuseteil (14) ausgebildet ist, insbesondere wobei der Kanal (1,2) aus Bohrungsabschnitten, insbesondere axial, also parallel zur Achsrichtung der abtreibenden Welle **(11),** und hierzu transversal verlaufenden Bohrungsabschnitten, zusammengesetzt ist.

7. Getriebevorrichtung nach einem der Ansprüche 3, 5 oder 6,
**dadurch gekennzeichnet, dass**
im zentralen Gehäuseteil (14) weitere Kanäle ausgebildet sind, die von **einem** Getriebeinnenraum in den Öltank münden,
insbesondere wobei die weiteren Kanäle jeweils aus Bohrungsabschnitten, insbesondere axial, also parallel zur Achsrichtung der abtreibenden Welle **(11),** und hierzu transversal verlaufenden Bohrungsabschnitten, zusammengesetzt sind.

8. Getriebevorrichtung nach mindestens einem der vorangegangenen Ansprüche,
**dadurch gekennzeichnet, dass**
aus dem Raumbereich Zusätzliche Kanäle zu zu schmierenden und/oder zu kühlenden Bereichen in **einem** Innenraum der Getriebevorrichtung führen, insbesondere zu einem Lager und/oder zu einem Bereich von miteinander im Eingriff stehenden Verzahnungen.

9. Getriebevorrichtung nach mindestens einem der vorangegangenen Ansprüche,
**dadurch gekennzeichnet, dass**
das zentrale Gehäuseteil zweistückig ausgeführt ist, **so dass ein oberes und ein unteres Stück ausgebildet ist,** wobei zumindest ein Kanal vom oberen Stück ins untere Stück durchgeführt ist.

10. Getriebevorrichtung nach Anspruch 9 und 3,
**dadurch gekennzeichnet, dass**
das untere Stück des zentralen Gehäuseteils (14) an seiner Unterseite Kühlrippen (30, 31) aufweist, insbesondere wobei an einer den Öltank zumindest teilweise begrenzenden Wand des unteren Stücks Kühlrippen (30, 31) ausgebildet sind und/oder wobei an einer eine Lageraufnahme zumindest teilweise begrenzenden Wand des unteren Stücks Kühlrippen (30, 31) ausgebildet sind.

11. Getriebevorrichtung nach Anspruch 9 oder 10,
**dadurch gekennzeichnet, dass**
an der Oberseite des oberen Stücks eine wellenartige Struktur als oberflächenvergrößernder Bereich ausgebildet ist.

12. Getriebevorrichtung nach mindestens einem der vorangegangenen Ansprüche,
**dadurch gekennzeichnet, dass**
an der Außenseite des Lagerdeckels (8) eine wellenartige Struktur als oberflächenvergrößernder Bereich ausgebildet ist, die im Kühlluftstrom des Lüfters angeordnet ist,

13. Getriebevorrichtung nach Anspruch 9, 10 oder 11,
**dadurch gekennzeichnet, dass**
ein Gehäusedeckel mit dem unteren und dem oberen Stück des zentralen Gehäuseteils (14) verbunden ist, wobei der Gehäusedeckel seitlich angeordnet ist und/oder eine wellenartige Struktur als oberflächenvergrößernder Bereich aufweist,
und/oder dass
im zentralen Gehäuseteil (14) ein dritter Kanal (10) vorgesehen ist, insbesondere ein aus radial und axial verlaufenden Bohrungsabschnitten zusammengesetzter Kanal,
wobei der dritte Kanal (10) vom oberen Stück ins untere Stück durchgeführt ist,
wobei der dritte Kanal (10) von der Oberseite zum Bereich eines unteren Lagers der abtreibenden Welle **(11)** führt, welches fettgeschmiert ist, wobei eine Nachschmierung durch Einleitung von Fett in den Mündungsbereich an der Oberseite der Getriebevorrichtung ausführbar ist,

14. Getriebevorrichtung nach mindestens einem der vorangegangenen Ansprüche,
**dadurch gekennzeichnet, dass**
am zentralen Gehäuseteil (14), insbesondere an einem Eckbereich des quaderförmig ausgebildeten unteren Stücks, insbesondere am unteren Stück, ein Befestigungsbereich einstückig ausgeformt ist, der derart in seitlicher, also radialer Richtung, sich erstreckt, dass eine in axialer Richtung verlaufende durchgehende Bohrung eingebracht ist, so dass eine Verbindungsschraube in axialer Richtung durchführbar und mit einem festen Teil einer die Getriebevorrichtung aufnehmenden Anlage oder Maschine verbindbar ist.

## Claims

1. A transmission assembly, in particular transmission,
wherein the transmission assembly has a central housing part (14) which receives a bearing of an output shaft (11) and a bearing of an input shaft (4),
wherein a bearing cover (8) is placed on the central housing part (14) and is connected, in particular screw-connected,
wherein the bearing cover (8) covers an axial end face of one of the axial end regions of the output shaft (11) and optionally also of an intermediate shaft in housing-forming manner,
wherein a cavity region (21) through which oil flows, in particular oil pocket (21), is formed between the bearing cover (8) and central housing part (14) and at least delimited by the central housing part (14) and by the bearing cover (8),
wherein a flat contact face is formed on the central housing part (14), in which face bores are formed, and the bearing cover (8) is placed with its correspondingly flat contact face on the flat contact face of the central housing part (14) and is connected by means of screws screw-connected into the bores,
wherein the flat contact face of the central housing part (14) and/or the flat contact face on the inner side of the bearing cover (8) in each case comprise a cutout which is at least a partial region of the cavity region (21),
wherein the cutout is introduced into the flat contact face of the central housing part (14) as a depression,
**characterised in that** the flat contact surfaces of the central housing part (14) and of the bearing cover (8) have [a] in each case a bore (20) which passes through the bearing cover (8) and the central housing part in each case, for passing through the input shaft (4),
the bore (20) being spaced apart from the cutout,
a fan being connected on the input shaft (4) in a positively and/or non-positively locking manner, the cooling air flow of which fan flows past the bearing cover (8),
in the central housing part (14) a first duct (3) running from an oil pump (19) to an upper side of the transmission assembly, and opening into the cavity region (21), an opening region being covered by the bearing cover (8).

2. A transmission assembly according to Claim 1,
**characterised in that**
the cooling air flow passes through cutouts (7) in a lantern flange,
in particular in a direction radial to the input shaft (4), in particular the lantern flange being connected to the housing, in particular to the central housing part (14), of the transmission assembly and being connected on its side remote from the transmission assembly to a motor housing of a motor which drives the input shaft (4).

3. A transmission assembly according to at least one of the preceding claims,
**characterised in that**
an oil tank is arranged in the transmission housing, which tank is at least partially bounded by the central housing part.

4. A transmission assembly according to at least one of the preceding claims,
**characterised in that**
the transmission assembly is mounted in a machine or installation, in particular cooling-tower installation, such that the output shaft (11) projects downwards, i.e. in the direction of gravity, out of a housing of the transmission assembly.

5. A transmission assembly according to Claim 3,
**characterised in that**
the oil tank is bounded by the central housing part and a housing cover which is connected hermetically thereto.

6. A transmission assembly according to Claim 3 or 5,
**characterised in that**
the oil tank is connected via a second duct (1, 2) to the oil pump (19), the second duct (1,2) being formed as a cutout in the central housing part (14), in particular the second duct (1, 2) being composed of bore portions, in particular bore portions running axially, i.e. parallel to the axial direction of the output shaft (11), and transversely thereto.

7. A transmission assembly according to one of Claims 3, 5 or 6,
**characterised in that**
further ducts are formed in the central housing part (14), which ducts from an inner space of the transmission open into the oil tank,
in particular the additional ducts in each case being composed of bore portions, in particular bore portions running axially, i.e. parallel to the axial direction of the output shaft (11), and transversely thereto.

8. A transmission assembly according to at least one of the preceding claims,
**characterised in that**
additional ducts lead out of the spatial region to regions in an inner space of the transmission assembly which are to be lubricated and/or to be cooled, in particular to a bearing and/or to a region of sets of toothing which are meshed with each other.

9. A transmission assembly according to at least one of the preceding claims,
**characterised in that**
the central housing part is designed in two pieces, so that an upper and a lower piece is formed, with at least one duct being carried through from the upper piece into the lower piece.

10. A transmission assembly according to Claim 9 and 3,
**characterised in that**
the lower piece of the central housing part (14) has on its underside cooling ribs (30, 31), in particular with cooling ribs (30, 31) being formed on a wall of the lower piece which at least partially bounds the oil tank, and/or with cooling ribs (30, 31) being formed on a wall of the lower piece which at least partially bounds a bearing receptacle.

11. A transmission assembly according to Claim 9 or 10,
**characterised in that**
a corrugation-like structure is formed on the upper side of the upper piece as a surface-increasing region.

12. A transmission assembly according to at least one of the preceding claims,
**characterised in that**
a corrugation-like structure (8) is formed on the outside of the bearing cover as a surface-increasing region, which structure is arranged in the cooling air flow of the fan.

13. A transmission assembly according to Claim 9, 10 or 11,
**characterised in that**
a housing cover is connected to the lower and the upper piece of the central housing part (14), the housing cover being arranged laterally and/or having a corrugation-like structure as a surface-increasing region,
and/or **in that**
a third duct (10) is provided in the central housing part (14), in particular a duct composed of bore portions running radially and axially,
the third duct (10) being carried through from the upper piece into the lower piece,
the third duct (10) leading from the upper side to the region of a lower bearing of the output shaft (11) which is grease-lubricated, it being possible to carry out relubrication by introducing grease into the opening region on the upper side of the transmission assembly.

14. A transmission assembly according to at least one of the preceding claims,
**characterised in that**
on the central housing part (14), in particular on a corner region of the cuboid lower piece, in particular on the lower piece, a fastening region is formed in one piece, which region extends in the lateral, i.e. radial, direction such that a continuous bore which runs in the axial direction is introduced, so that a connecting screw can be passed through in the axial direction and can be connected to a fixed part of an installation or machine which receives the transmission assembly.

## Revendications

1. Dispositif de transmission, en particulier transmission,
ledit dispositif de transmission comportant une partie centrale (14) de carter, qui reçoit un palier d'un arbre de sortie (11) et un palier d'un arbre d'entrée (4),
un couvercle (8) de palier étant mis en place sur ladite partie centrale (14) de carter et étant relié, notamment solidarisé par vissage,
ledit couvercle (8) de palier coiffant une face frontale de l'une des régions extrêmes axiales dudit arbre de sortie (11) et également d'un arbre intermédiaire, le cas échéant, avec formation d'un carter,
sachant qu'une cavité (21), en particulier une poche d'huile (21) ménagée entre ledit couvercle (8) de palier et ladite partie centrale (14) de carter, est parcourue par de l'huile et est au moins délimitée par ladite partie centrale (14) de carter et par ledit couvercle (8) de palier,
une surface plane de contact, dans laquelle des alésages sont pratiqués, étant façonnée sur ladite partie centrale (14) de carter, ledit couvercle (8) de palier étant mis en place sur ladite surface plane de contact de ladite partie centrale (14) de carter, par sa surface de contact dotée d'une planéité correspondante, et étant relié au moyen de vis vissées dans lesdits alésages,
ladite surface plane de contact de ladite partie centrale (14) de carter, et/ou ladite surface plane de contact située à la face intérieure dudit couvercle (8) de palier, étant respectivement dotée(s) d'un évidement qui constitue au moins une région partielle de ladite cavité (21),
ledit évidement étant ménagé en tant que renfoncement pratiqué dans ladite surface plane de contact de ladite partie centrale (14) de carter,
**caractérisé par le fait que**
les surfaces planes de contact de la partie centrale (14) de carter et du couvercle (8) de palier sont pourvues, respectivement, d'un alésage (20) parcourant d'un trait ledit couvercle (8) de palier et ladite partie centrale de carter, en vue du passage de l'arbre d'entrée (4),
ledit alésage (20) étant distant de l'évidement,
un ventilateur, dont le courant d'air de refroidissement balaie ledit couvercle (8) de palier, étant relié audit arbre d'entrée (4) par complémentarité de formes et/ou par engagement positif,
sachant qu'un premier canal (3), partant d'une pompe à huile (19) à l'intérieur de ladite partie centrale (14) de carter, s'étend au niveau d'une face supérieure dudit dispositif de transmission et débouche dans la cavité (21), une zone d'embouchure étant coiffée par ledit couvercle (8) de palier.

2. Dispositif de transmission selon la revendication 1,
**caractérisé par le fait que**
le courant d'air de refroidissement traverse des évidements (7) d'une bride ajourée,
en particulier dans une direction radiale par rapport à l'arbre d'entrée (4), sachant notamment que ladite bride ajourée est reliée au carter, en particulier à la partie centrale (14) du carter du dispositif de transmission, et est reliée, sur son côté pointant à l'opposé dudit dispositif de transmission, à un carter d'un moteur entraînant ledit arbre d'entrée (4).

3. Dispositif de transmission selon au moins l'une des revendications précédentes,
**caractérisé par le fait**
**qu'**un réservoir d'huile, logé dans le carter de transmission, est au moins partiellement délimité par la partie centrale du carter.

4. Dispositif de transmission selon au moins l'une des revendications précédentes,
**caractérisé par le fait que**
ledit dispositif de transmission est monté dans une machine ou dans une installation, en particulier une installation à tour de refroidissement, de telle manière que l'arbre de sortie (11) soit en saillie vers le bas, c'est-à-dire dans la direction de la gravité, au-delà d'un carter dudit dispositif de transmission.

5. Dispositif de transmission selon au moins l'une des revendications précédentes,
**caractérisé par le fait que**
le réservoir d'huile est délimité par la partie centrale du carter, et par un couvercle de carter relié à cette dernière de manière étanche.

6. Dispositif de transmission selon la revendication 3 ou 5,
**caractérisé par le fait que**
le réservoir d'huile est raccordé à la pompe à huile (19) par l'intermédiaire d'un deuxième canal (1, 2), lequel deuxième canal (1, 2) est pratiqué sous la forme d'un évidement dans la partie centrale (14) du carter, sachant notamment que ledit deuxième canal (1, 2) est composé de tronçons d'alésage, en particulier de tronçons d'alésage qui s'étendent dans le sens axial, c'est-à-dire parallèlement à la direction de l'axe de l'arbre de sortie (11) et transversalement par rapport à celui-ci.

7. Dispositif de transmission selon l'une des revendications 3, 5 ou 6,
**caractérisé par le fait que**
des canaux supplémentaires, pratiqués dans la partie centrale (14) du carter, débouchent dans le réservoir d'huile à partir d'un espace interne de la transmission,
sachant notamment que lesdits canaux supplémentaires sont respectivement composés de tronçons d'alésages, en particulier de tronçons d'alésages qui s'étendent dans le sens axial, c'est-à-dire parallèlement à la direction de l'axe de l'arbre de sortie (11) et transversalement par rapport à ce dernier.

8. Dispositif de transmission selon au moins l'une des revendications précédentes,
**caractérisé par le fait que**
des canaux additionnels partent de la zone d'espace et mènent à des régions à lubrifier et/ou à refroidir, dans un espace interne dudit dispositif de transmission, notamment à un palier et/ou à une région comportant des dentures en prise mutuelle.

9. Dispositif de transmission selon au moins l'une des revendications précédentes,
**caractérisé par le fait que**
la partie centrale du carter est réalisée en deux éléments, donnant ainsi naissance à des éléments supérieur et inférieur, sachant qu'au moins un canal pénètre d'un trait dans l'élément inférieur, à partir de l'élément supérieur.

10. Dispositif de transmission selon les revendications 9 et 3,
**caractérisé par le fait que**
l'élément inférieur de la partie centrale (14) du carter est pourvu d'ailettes de refroidissement (30, 31) à sa face inférieure, sachant notamment que des ailettes de refroidissement (30, 31) sont ménagées sur une paroi dudit élément inférieur qui délimite au moins partiellement le réservoir d'huile, et/ou sachant que des ailettes de refroidissement (30, 31) sont ménagées sur une paroi dudit élément inférieur qui délimite au moins partiellement un logement de palier.

11. Dispositif de transmission selon la revendication 9 ou 10,
**caractérisé par le fait**
**qu'**une structure de type ondulation est ménagée à la face supérieure de l'élément supérieur, en tant que région accroissant la superficie.

12. Dispositif de transmission selon au moins l'une des revendications précédentes,
**caractérisé par le fait**
**qu'**une structure de type ondulation, ménagée à la face extérieure du couvercle (8) de palier en tant que région accroissant la superficie, est située dans le courant d'air de refroidissement du ventilateur.

13. Dispositif de transmission selon la revendication 9, 10 ou 11,
**caractérisé par le fait**
**qu'**un couvercle de carter est relié aux éléments inférieur et supérieur de la partie centrale (14) du carter, ledit couvercle de carter occupant une position latérale et/ou étant muni d'une structure de type ondulation, en tant que région accroissant la superficie,
et/ou
**qu'**un troisième canal (10), en particulier un canal composé de tronçons d'alésage qui s'étendent dans les sens radial et axial, est prévu dans ladite partie centrale (14) du carter, ledit troisième canal (10) pénétrant d'un trait dans ledit élément inférieur, à partir dudit l'élément supérieur,
ledit troisième canal (10) gagnant, à partir de la face supérieure, la région d'un palier inférieur de l'arbre de sortie (11) qui est lubrifié par graissage, un graissage ultérieur pouvant être exécuté par introduction de graisse dans la zone d'embouchure, à la face supérieure dudit dispositif de transmission.

14. Dispositif de transmission selon au moins l'une des revendications précédentes,
**caractérisé par le fait**
**qu'**une zone de fixation ménagée d'un seul tenant sur la partie centrale (14) du carter, en particulier dans une zone d'angle de l'élément inférieur réalisé en forme de parallélépipède, notamment sur ledit élément inférieur, s'étend dans une direction latérale, c'est-à-dire radiale, de manière à former un alésage ininterrompu s'étendant dans le sens axial, de telle sorte qu'une vis de liaison puisse être engagée d'un trait dans le sens axial et puisse être reliée à une partie fixe d'une installation, ou machine, recevant ledit dispositif de transmission.
